# EUROPEAN PATENT SPECIFICATION

(11) **EP 1 178 460 B1**
(45) Date of publication and mention of the grant of the patent: **13.09.2006**
(21) Application number: 01306539.6
(22) Date of filing: 31.07.2001
(51) Int. Cl.: G09G 3/20, G09G 5/00

(54) **Automatically adapting digital picture frame display**
Automatische Anpassung der Darstellung von digitalen Bildern
Adaptation automatique de l'affichage d'images numériques

(30) Priority: 31.07.2000 US 629260
(43) Date of publication of application: 06.02.2002
(73) Proprietor: Hewlett-Packard Company, Palo Alto, CA 94304 (US)
(72) Inventor: Benjamin, Trudy L., Portland, OR 97220 (US)
(74) Representative: Jackson, Richard Eric

(56) References cited:
- WO-A-99/26224
- WO-A-99/45710
- GB-A- 2 341 033
- US-A- 5 488 391
- US-A- 6 002 386
- US-A- 6 064 556

## Description

### Field of the Invention

The present invention relates generally to computer display devices, and particularly to displays which may be wall-mounted or table-mounted to view computer generated pictures or scenes from various locations within a room, or outdoors for outdoor displays. In particular, the present invention relates to a display which automatically adapts for changing ambient lighting, and to changing positions of a viewer, to constantly present an optimal image to the viewer regardless of these changing conditions.

### Background of the Invention

In the past, computer display devices, such as monitors used on desktops and consoles typically had displays or screens which provided the best view when a person was positioned directly in front of the screen. Recent advances in display technology are now being employed in more creative applications, beyond the utilitarian nature of computer displays and work screens. Some of the more recent pleasurable uses for these advances which just coming on the market are known as "digital picture frames." A digital picture frame serves the same purpose as a conventional picture frame, except that the image is computer generated. For instance, digital picture frame products are currently available from several companies, including Sony, Cevia, and Digi-Frame. These current digital picture frames display digital pictures in a slide show format, switching from one image to the next after a certain time has passed. Indeed, one known digital picture frame system actually changes the type of images depending upon who is in the room, with each person being identified by a small transmitter which may be either worn or carried by the person.

Unfortunately, all of these known digital picture frames have a severe drawback in that they are designed for static viewing conditions, which is a carry over from the computer monitor technology where a user would sit directly in front of the computer. To accommodate for various changes in the ambient lighting, the digital picture frames, along with their computer monitor predecessors, had brightness controls which were adjusted manually. While some of the newer digital picture frames may be programmed to automatically turn on or off at specific times during the day, unfortunately user intervention is still required to adjust the display in response to changing lighting conditions during the day, such as sunrise, sunset, incoming storms, along with the turning on/off, dimming or brightening of room lighting. Thus, at some times during the day the image displayed by the digital picture frame looks wonderful, whereas during other times of the day as the lighting conditions change, the image looks worse, for instance, when it is washed out by bright sunlight entering through a nearby window. With current units, a user must manually adjust the picture brightness to compensate for these varying changes in ambient lighting, or suffer viewing the image at less than optimal quality.

Thus, there exists a need for a new manner of displaying images for use in home, office and other environments where ambient lighting conditions change and people move around to different locations relative to the display while viewing the image.

United States Patent No. 5,488,391 discloses a method and device for optimising the performance characteristics of a liquid crystal display matrix screen as a function of the angle of observation. The device comprises an image circuit formed by an image generator, a micro-zone processing unit, a screen interface and an LCD screen. To optimise the performance characteristics of the screen as a function of the angle of observation, the position of the observer is detected and, as a function of this position, the appropriate profile of luminosity of the micro-zones of the screen is selected.

### Summary Of The Invention

According to one aspect of the present invention, there is provided an automatically adjusting digital display system for displaying a digital image to a viewer, wherein the digital image is a representation of a virtual object, comprising:
a display device that selectively displays the digital image for the viewer in response to a control signal;
a sensor that detects the direction from which the viewer views the display device; and
a controller that adjusts the control signal to adapt the display of the image to changes in the direction from which the viewer views the display device, wherein
in response to detecting the direction from which the viewer views the display device, the sensor sends a sensor signal to the controller which adjusts the control signal to display an image that is rotated and that, when viewed by the viewed, represents the virtual object as seen from the direction from which the viewer views the display device.

According to another aspect of the present invention, there is provided a method of displaying a digital image to a viewer, wherein the digital image is a representation of a virtual object, comprising:
displaying the digital image for the viewer with a display device in response to a control signal;
detecting the direction from which the viewer views the display device; and
adjusting the control signal to adapt the display of the image to changes in the direction from which the viewer views the display device, wherein
the adjusting step is performed in response to the detecting step and comprises adjusting the control signal to display an image that is rotated and that, when viewed by the viewer represents the virtual object as seen from the direction from which the viewer views the display device.

One goal of the present invention is to provide an automatically adjusting digital display system which senses changing viewer locations, and adapts to provide the viewer with an optimal image regardless of the viewer's location relative to the display.

A further goal of the present invention is to provide a method of orienting and adjusting a displayed image to compensate for changing ambient conditions and changing viewer locations.

### Brief Description of the Drawings

FIG. 1 is a perspective view of one form of an automatically adapting digital picture frame display apparatus embodied in a wall-mounted unit, shown mounted inside a room adjacent to a window, along with a group of triangulating sensors also shown as wall-mounted units, as well as an alternative embodiment of a table-top unit shown sitting on a flower table, next to an alternative table-top embodiment of a triangulating sensor.
FIG. 2 is a front elevational view of the wall-mounted display of FIG. 1, shown with a viewer located to one side of the display to observe a displayed image.
FIG. 3 is a front elevational view of the wall-mounted display of FIG. 1, shown with the viewer now located to the opposite side of the display from that shown in FIG. 2, here, with the displayed image being rotated to accommodate this new viewing position.

### Detailed Description of a Preferred Embodiment

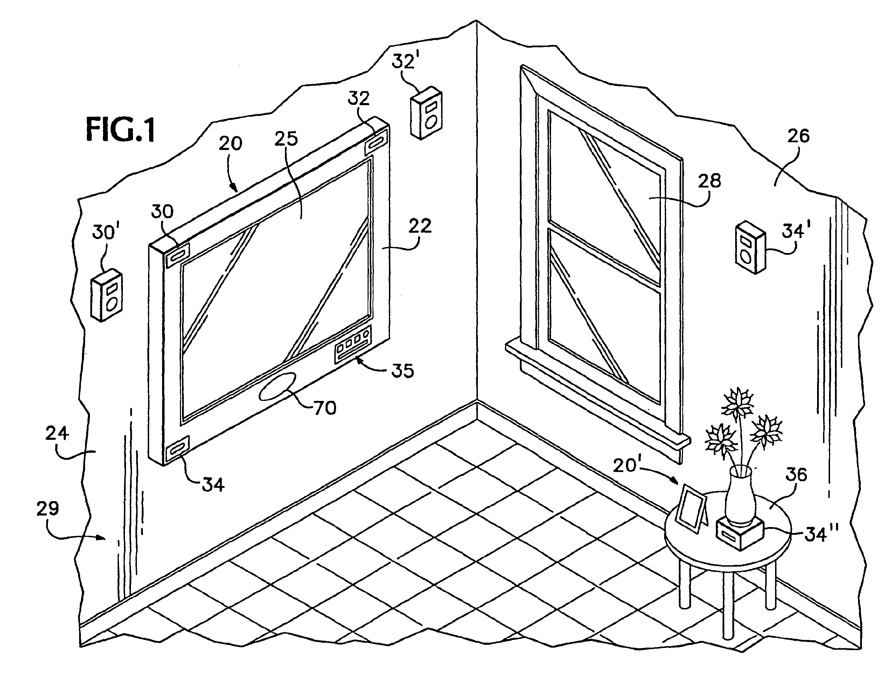

FIG. 1 illustrates one form of an automatically adapting digital picture frame display system 20, constructed in accordance with the present invention. The digital picture frame display system 20 includes a bordering frame portion 22, which is vertically mounted to a wall 24, for instance, in the same way a conventional picture frame may be mounted to a wall. The frame 22 surrounds and houses a digital display 25, which may be constructed using technologies similar to those used for computer display screens, such as using liquid crystal display technology. Along an wall 26 joining wall 24, is a window 28 to the outdoors, with the remaining walls defining a room 29 being omitted for clarity from the view of FIG. 1. To monitor various changing conditions within the room 29, the digital frame system 20 may include a group of sensors, here illustrated as three triangulating sensors 30, 32, and 34 located along three corners of the frame 22. Near a fourth corner of the frame 22, the picture frame system 20 may also include a manual input apparatus 35, such as one including a key pad.

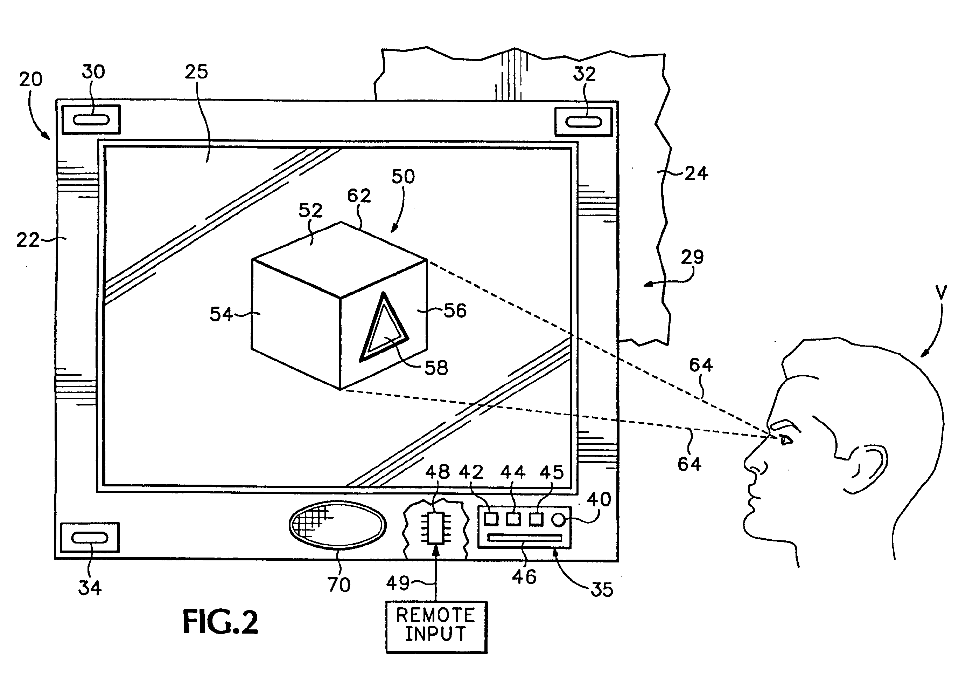

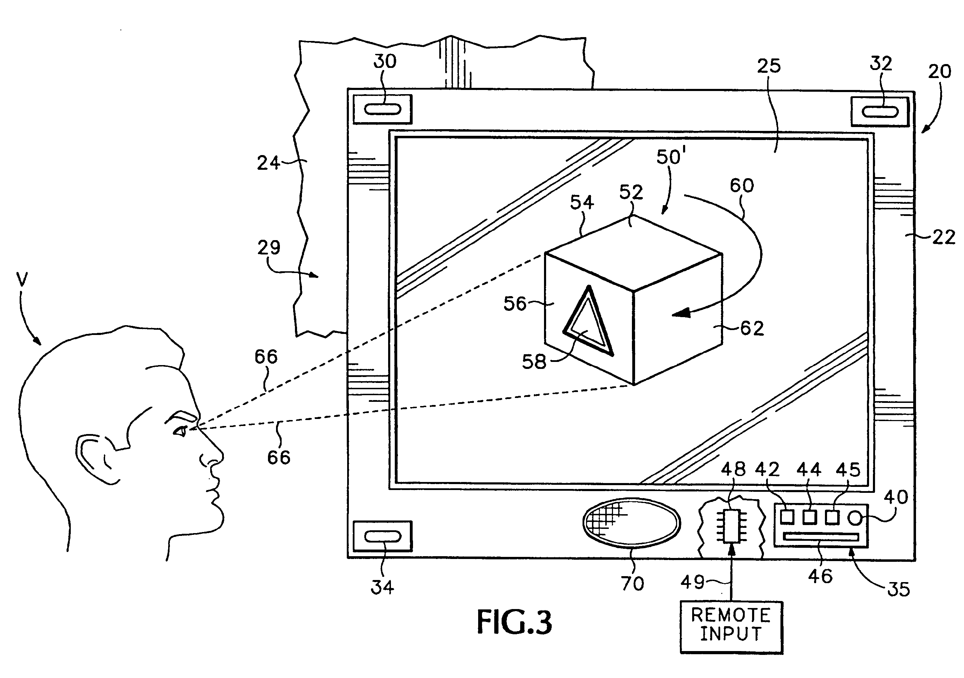

While the integral sensors 30-34 may be preferred for ease of manufacturing and shipping, in some implementations it may be desirable to supply the sensors as separate units, such as wall mounted sensors 30' and 32' which are mounted on wall 24, and sensor 34' mounted on wall 26. The triangulating placement of the separate sensor units 30'-34' advantageously allows these sensors, as well as the triangulating placement of sensors 30-34, to be able to determine the position of a viewer V (see FIGS. 2 and 3) within the room 29. Alternatively, instead of using the wall mounted sensors 30'-34', table-top sensors, such as sensor unit 34" may be used, such here shown resting on a flower table 36. Combinations of wall-mounted and table-mounted sensors may be used, depending upon the design of a particular room and its furnishings, for instance by using sensors 30' and 32' along with sensor 34". Clever design of the sensors 30'-34', 34" may allow them to blend into the room furnishings, such as shown for sensor 34" which serves as a vase stand in FIG. 1.

Indeed, while the illustrated embodiment focuses in detail on the wall mounted digital picture frame 20, it is apparent that these concepts may also be applied to a free standing digital picture frame apparatus 20', shown sitting on top of the table 36. The remote sensors 30'-34' and/or 34" may be used to supply input information to the free standing frame 20', or the frame assembly 20' may be equipped with integral sensors, such as sensors 30-34. Indeed, one advantage of using remote sensors 30"-34", 34" is that signals generated by these sensors may be received by more than one frame system, such as frames 20 and 20'. While the remote sensors 30'-34", 34" may be coupled by wiring to either of the digital picture frames 20 or 20', it is preferred that these remote sensors be coupled to the digital frames 20 and/or 20' using a remote linking technology, such as radio waves, light, infrared, laser, or other wireless signal transmission means.

Referring now to FIG. 2, details of the keypad portion 35 of the digital picture frame 20 may be more easily viewed as including various inputs, such as an on/off switch or pushbutton 40, and various other adjustment inputs 42, 44 and 45, for instance to adjust color, tint and contrast. The digital picture frame 20, 20' may receive input signals of nominal, or normal, unadjusted digital images locally or remotely. Image inputs may be received locally by the digital picture frame 20, 20' by including an input media receiving device, such as slot 46 for receiving various picture inputs supplied on any type of recording medium, such as magnetic diskettes, PCMCIA memory cards (auxiliary memory cards conforming to standards established by the Personal Computer Memory Card International Association, hence "PCMCIA cards"), magnetic tapes, or other interchangeable memory storage devices. The incoming image signal is received and processed by a controller 48, shown schematically in the views of FIGS. 2 and 3.

The input images may also be received from remote sources in a variety of different fashions, such as from the internet over telephone lines, fiber optic conduits, or satellite transmissions, as well as from a remote personal computer or processor device. The currently available Cevia brand static digital picture frame mentioned in the Background section above may be connected to the internet via a telephone line modem to receive nightly downloads of new digital images for display. Indeed, new wireless connection systems are becoming available which allow transmission of images over radio waves from a personal computer in a nearby room to a receiving device which may be incorporated into the processor 48. These remote input image signal inputs are illustrated schematically in FIGS. 2 and 3 by a input signal line 49 entering the processor 48.

To operate the digital picture frame 20, 20', a controller 48 is preferably included, as indicated schematically in the views of FIGS. 2 and 3, although the frames 20, 20' may be operated in some implementations in response to a remote controller or computer (not shown) generating images to be displayed. For instance, FIG. 2 shows viewer V observing an image 50 displayed by screen 25 of the digital picture frame 20. Here the image 50 is a cube having a top 52, a first side 54 and a second side 56. The cube side 56 bears a triangular image 58 which is facing toward the viewer V in FIG. 2, when the viewer V is located as shown to the right with respect the picture frame 20.

In FIG. 3, we see the viewer V has moved over to the left of the digital picture frame 20. The movement of the viewer V from the location in FIG. 2 to the location in FIG. 3 is monitored by sensors 30-34. Recall from the discussion above, that the wall-mounted sensors the remote sensors 30'-34", 34" may be used instead of, or in some implementations in addition to, the illustrated frame-mounted integral sensors 30-34. In response to monitoring of the motion of the viewer V, each of the illustrated sensors 30-34 send sensor signals, here comprising positional data signals, to the controller 48, which responds by generating a control signal to rotate the image displayed by screen 25 from the view of FIG. 2 as image 50, to a new viewing image 50' shown in FIG. 3, with this rotation of the cube being indicated by a curved arrow 60. In FIG. 3, we now see a third side 62 of cube 50, which was obscured from view in FIG. 2. Additionally, the first cube side 54 which was viewable in FIG. 2 is now hidden in the view of FIG. 3, which is apparent from comparing the field of view in FIG. 2, defined between two dashed lines 64, and the new field of view in FIG. 3 defined between two dashed lines 66. The controller 48 has acted in response to sensor signals received from the illustrated sensors 30-34 to maintain the apparent orientation of the triangle 58 to be continually facing the viewer V, regardless of his location within the room 29. For multiple viewers in the room 29, the controller 48 may employ an averaging routine to display an optimal image to the majority of people in the room, or the controller may default to a static image, particularly when positional computations become complex or too lengthy, unnecessarily delaying image updates.

Thus, the automatically adapting digital picture frame system 20, 20' monitors the room conditions to automatically adjust viewing conditions. Besides the orientation of an image 50-50' with respect to the position of viewer V within the room 29, other viewing conditions which the controller 48 may automatically adjust include the on/off state of the display 20, the brightness, the contrast, the hue and color saturation. For instance, in a very basic system, the controller 48 may turn the display off when people leave the room 29, and turn the display on when people enter, or the display may be only activated during certain times of the day. Such a system may only need a single sensor 30, rather than a full set of sensors for triangulating viewer location to rotate the image as described above. As a more advanced example, the brightness of the display screen 25 may also be adjusted depending upon the amount of ambient light entering window 28. For instance, when bright sunlight is streaming into room 29 through window 28, the brightness of the screen 25 may be increased, to prevent the image 50 from having a "washed-out" appearance.

These various adjustments of the display system 20, 20' may also be made in response to the intensity and direction of the ambient lighting, for instance whether track lighting is used, fluorescent ceiling lights, an incandescent table lamp, or candlelight for a romantic dinner. For instance, in another advanced implementation, the controller 48 may adjust the color mapping of the display screen 25 to compensate for the type of lighting and/or the lighting intensity. Color mapping is changed by the controller adjusting the Red-Green-Blue output levels for each pixel displayed by screen 25, similar to the techniques used by inkjet printers to adjust the Cyan-Yellow-Magenta ink levels per color pixel for different types of paper or other print media to provide optimal hardcopy outputs regardless of the type media being used. For instance, the controller 48 may compensate for the inherently high yellow/red content of incandescent lighting by performing an inverse color mapping technique which cancels out the yellow/red influence of the incandescent lighting. Similarly, the controller 48 may compensate for the blue tones induced by fluorescent lighting. In very bright lighting conditions, such as when sunlight is streaming through the window 28, the controller may also adjust the color mapping to saturate the colors to provide a more pleasing, vivid image for viewer V to see, while in dimmer lighting conditions, less saturation may be desired.

Another more advanced display system 20, 20' may adjust for the viewers located at a very oblique angle relative to the screen 25, for instance when standing close to the wall 24 to either side of the frame 22. At such an extreme oblique viewing angle (with the screen 25 serving as a reference plane), screen resolution may be sacrificed as a trade-off between viewing angle and resolution, resulting in a more grainy appearing image having fewer pixels per square centimeter, than when viewing the image 50 from directly in front of the screen 25, where more resolution is desired with a greater number of pixels per square centimeter.

Furthermore, the color mapping may also be adjusted to accommodate these oblique viewing angles, perhaps by increasing the color saturation to compensate for any wash-out effects inherent to the particular display screen technology employed. Indeed, the controller 48 may balance a processing tradeoff between the refresh rate at which image adjustment is performed and the desired pixel density, with greater resolution and pixel density occurring at the expense of slower refresh rates. For instance, when the viewer V is centrally located in front of the screen 25, the pixel density is preferably higher and the refresh rate may be accordingly lower.

As mentioned above, sensing of the conditions within the display room 29 may be accomplished by incorporating a variety of different features into the sensors 30-34, 30'-34' and 34". For instance, as a basic feature these sensors may detect the mere presence or absence of a viewer V within room 29 based on one or more different means, such as by detecting motion, heat, sound and other object sensing schemes, for instance using systems which are currently employed in many security systems and automatic room lighting systems. In response to this basic presence or absence detection, the system 20, 20' automatically activates (turns on) the screen 25 when a viewer V enters the display room 29, and automatically deactivates (turns off) screen 25 when the viewer V leaves the room, thereby conserving energy and screen life when no one is available to view the image 50. Also these sensors may be used to detect the ambient light intensity, that is, the changing in daylight, sunlight, or street lighting coming through window 28, as well as other light sources within the room, such as ceiling light fixtures, lamps, etc. allowing the controller 48 to adjust the image brightness and contrast accordingly.

As described above with respect to FIGS. 2 and 3, a more sophisticated implementation may detect the position of the viewer V within the room 29, as well as the direction of changing ambient light, such as sunlight. The controller 48 may also respond to sensor signal to generate screen control signals which adjust the color mapping to compensate for the type of spectrum of ambient lighting, along with light intensity levels. The sensors 30-34, 30'-34' and 34" may include position sensing technology, such as a scanning beam technology used in radar, or by using multiple sensors as illustrated from which the position of viewer V may be triangulated. Additionally, this viewer location system may be processed in any number of dimensions, such as from just picking up the presence of a person, to judging their distance from the screen 25, to adjusting the view relative to where the viewer is standing, to changing the view to accommodate the height of the viewer V. In a preferred combination, both viewing angle and ambient light are compensated for by the display 20 to continually present an optimal viewing image.

### Conclusion

Thus, a variety of benefits and advantages are realized using the automatically adapting digital picture frame display system 20, 20', as well as a method of automatically adapting the display of an image 50, 50' based on various changing conditions within the display room 29. For instance, by automatically turning the screen 25 on and off so the images 50, 50' only display when viewer V is present, the screen life will be increased, and power consumption will be reduced. Moreover, the display screen 25 may be dimmed during evening conditions, when it is dark outside the window 28 to provide an optimal image both day and night, as opposed to current displays which either overdrive the display to accommodate worse case bright ambient light conditions, or standardized around some nominal conditions, which are then unable to accommodate for bright sunlight entering window 28 which washes out the display image. Alternatively, if no one is present within the room, the controller 48 may be programmed to constantly display a static image, so anyone walking by the room entrance can look into the room and enjoy a static picture, that is, one which does not adapt to the changing position of viewers, but remains the same, similar to a conventional oil painting. As a further adaptation, when no one is in the room 29, the screen 25 may continue to accommodate for ambient light changes so viewers passing by the room entrance are continually treated to an optimal static image.

As a further advantage, while an integral unit having all sensors included on the display frame 22 is preferred, it may be preferably to provide a basic display system 20, 20' for consumers which is upgradeable. For instance, a very basic unit may be initially purchased, having only on/off switching capability depending on whether people are present to view the image, and/or basic intensity adjustment capability depending upon the ambient light levels. Through the addition of separate modular sensors 30'-34' or 34", the ambient lighting spectrum may be compensated for by color mapping adjustments. Additional sensors may be added to a basic system to provide the viewer triangulation capability which allows the controller 48 to adjust the screen 25 to accommodate viewer location within the room 29.

It is apparent that while the illustrated display system 20, 20' is shown in an indoor environment, such a display system may be easily modified for outdoor use, such as for advertising which adapts to the presence or absence of consumers, as well as for changing ambient lighting conditions. Furthermore, the display 20 may also be used for public entertainment purposes, such as in parks, zoos, restaurants or nightclubs. Various educational uses of the display system 20 are also possible, such as by displaying a program having an accompanying narrative broadcast using an optional speaker 70. A speaker 70 may also be used to compliment the displayed image, for instance, to provide soothing music when showing a waterfall or other relaxing image. Thus, it is apparent that the automatically adjusting digital display system 20, 20', and method of its use may be adapted in a variety of different ways and implementations which fall within the scope of the claims below.

## Claims

1. An automatically adjusting digital display system (20; 20') for displaying a digital image (50) to a viewer (V), wherein the digital image is a representation of a virtual object, comprising:
a display device (25) adapted to selectively display the digital image (50) for the viewer (V) in response to a control signal;
a sensor (30, 32, 34; 30', 32', 34'; 34") adapted to detect the direction from which the viewer (V) views the display device (25); and
a controller (48) adapted to adjust the control signal to adapt the display of the image to changes in the direction from which the viewer (V) views the display device (25), wherein the sensor (30, 32, 34; 30', 32', 34'; 34") is adapted to send in response to detecting the direction from which the viewer (V) views the display device (25) a sensor signal to the controller (48) which is adapted to adjust the control signal to display an image that is rotated and that, when viewed by the viewer (V), represents the virtual object as seen from the direction from which the viewer (V) views the display device (25).

2. An automatically adjusting digital display system (20; 20') according to claim 1, wherein:
the sensor (30, 32, 34; 30', 32', 34'; 34") is adapted to monitor ambient conditions in the vicinity of the display device (25) and to generate in response thereto a sensor signal; and
the controller (48) is adapted to adjust the control signal in response to the sensor signal for changes in said ambient conditions to adapt the display (25) of the image (50).

3. An automatically adjusting digital display system (20; 20') according to claim 2, wherein the controller (48) is adapted to generate the control signal in response to an image input signal corresponding to a normal version of the digital image (50).

4. An automatically adjusting digital display system (20; 20') according to claim 3, further including an internet communication linking device which is adapted to selectively communicate with an internet web site, and wherein the image input signal (49) is received as a download from the web site.

5. An automatically adjusting digital display system (20; 20') according to claim 3, further including a computer linking device which is adapted to selectively receive the image input signal (49) from a computer.

6. An automatically adjusting digital display system (20; 20') according to claim 3, further including a storage media reading device (46) which is adapted to read the image input signal from a storage media selectively received by the storage media reading device.

7. An automatically adjusting digital display system (20; 20') according to any preceding claim further comprising an input device (35) for receiving input instructions from an operator.

8. An automatically adjusting digital display system (20; 20') according to any preceding claim further including a support member (22) which is adapted to support the display device (25), the sensor (30, 32, 34) and the controller (48).

9. An automatically adjusting digital display system (20; 20') according to any one of claims 1-7 further including a support member (22) which is adapted to support the display device (25) and the controller (48), with the sensor (30', 32', 34') being separate from the support member (22).

10. An automatically adjusting digital display system (20; 20') according to any preceding claim wherein:
the sensor (30, 32, 34; 30', 32', 34'; 34") comprises a motion detecting device; and
the controller (48) is adapted to activate the display device (25) in response to motion detected by the motion detecting device.

11. An automatically adjusting digital display system (20; 20') according to any preceding claim wherein:
the sensor (30, 32, 34; 30', 32', 34'; 34") comprises an ambient lighting level detecting device; and
the controller (48) is adapted to adjust the display device (25) in response to the ambient lighting level detected by the ambient lighting level detecting device.

12. An automatically adjusting digital display system (20; 20') according to any preceding claim wherein:
the sensor (30, 32, 34; 30', 32', 34'; 34") comprises an ambient lighting spectrum detecting device; and
the controller (48) is adapted to adjust color mapping for the display device (25) in response to the spectrum of the ambient lighting detected by the ambient lighting spectrum detecting device.

13. An automatically adjusting digital display system (20; 20') according to any preceding claim wherein:
the sensor (30, 32, 34; 30', 32', 34'; 34") is adapted to comprise a locational detecting device which is adapted to detect the location of a person (V); and
the controller (48) is adapted to adjust the display device (25) in response to the location of the person (V) detected by the locational detecting device.

14. An automatically adjusting digital display system (20; 20') according to any preceding claim further including a speaker device (70) which is adapted to emit an audible output.

15. A method of displaying a digital image (50) to a viewer (V), wherein the digital image is a representation of a virtual object, comprising:
displaying the digital image (50) for the viewer (V) with a display device (25) in response to a control signal;
detecting the direction from which the viewer (V) views the display device (25); and
adjusting the control signal to adapt the display of the image to changes in the direction from which the viewer (V) views the display device (25), wherein
the adjusting step is performed in response to the detecting step and comprises adjusting the control signal to display an image that is rotated and that, when viewed by the viewer (V) represents the virtual object as seen from the direction from which the viewer (V) views the display device (25).

16. A method according to claim 15, further comprising:
sensing ambient conditions in the vicinity of the display device (25); and
adjusting the control signal in response to said sensing to adapt the display of the digital image (50) by the display device (25).

17. A method according to claim 15, further including the step of receiving a nominal version of the digital image (50), and wherein the adjusting step comprises the step of adjusting the nominal version of the digital image (50).

18. A method according to claim 17, wherein the receiving step comprises receiving the nominal version (50) from an internet web site.

19. A method according to claim 18, wherein the receiving step comprises periodically receiving new digital images from the web site.

20. A method according to claim 17, wherein the receiving step comprises receiving the nominal version (50) from a computer.

21. A method according to claim 17, wherein the receiving step comprises receiving the nominal version (50) from a storage medium.

22. A method according to any one of claims 15-21, further including the step of receiving input instructions (40, 42, 44, 45) from an operator.

23. A method according to any one of claims 15-21, wherein:
the sensing step comprises detecting motion; and
the adjusting step comprises the step of activating the display device (25) in response to the motion detecting step.

24. A method according to any one of claims 15-21, wherein the sensing step comprises detecting an ambient lighting level, and the adjusting step comprises the step of adjusting the display device (25) in response to the detecting step.

25. A method according to any one of claims 15-21, wherein:
the sensing step comprises detecting the location of a person (V); and
the adjusting step comprises adjusting the display device (25) in response to the detecting step.

26. A method according to any one of claims 15-21, wherein the adjusting step comprises adjusting color mapping for display device (25).

27. A method according to any one of claims 15-21, further including the step of emitting an audible output (70).

## Patentansprüche

1. Ein sich automatisch einstellendes Digitalanzeigesystem (20; 20') zum Anzeigen eines digitalen Bildes (50) gegenüber einem Betrachter (V), wobei das digitale Bild eine Darstellung eines virtuellen Objekts ist, wobei das System folgende Merkmale aufweist:
eine Anzeigevorrichtung (25), die dahin gehend angepasst ist, ansprechend auf ein Steuersignal das digitale Bild (50) selektiv für den Betrachter (V)anzuzeigen;
einen Sensor (30, 32, 34; 30', 32', 34'; 34"), der dahin gehend angepasst ist, die Richtung, aus der der Betrachter (V) die Anzeigevorrichtung (25) betrachtet, zu erfassen; und
eine Steuerung (48), die dahin gehend angepasst ist, das Steuersignal dahin gehend einzustellen, die Anzeige des Bildes an Änderungen der Richtung anzupassen, aus der der Betrachter (V) die Anzeigevorrichtung (25) betrachtet, wobei der Sensor (30, 32, 34; 30', 32', 34'; 34") dahin gehend anpasst ist, ansprechend auf das Erfassen der Richtung, aus der der Betrachter (V) die Anzeigevorrichtung (25) betrachtet, ein Sensorsignal an die Steuerung (48) zu senden, die dahin gehend angepasst ist, das Steuersignal dahin gehend einzustellen, ein Bild anzuzeigen, das gedreht ist und das, wenn es durch den Betrachter (V) betrachtet wird, das virtuelle Objekt aus der Perspektive der Richtung darstellt, aus der der Betrachter (V) die Anzeigevorrichtung (25) betrachtet.

2. Ein sich automatisch einstellendes Digitalanzeigesystem (20; 20') gemäß Anspruch 1, bei dem:
der Sensor (30, 32, 34; 30', 32', 34'; 34") dahin gehend angepasst ist, Umgebungsbedingungen in der Nähe der Anzeigevorrichtung (25) zu überwachen, und dahin gehend angepasst ist, ansprechend darauf ein Sensorsignal zu erzeugen; und
die Steuerung (48) dahin gehend angepasst ist, das Steuersignal ansprechend auf das Sensorsignal bezüglich Änderungen der Umgebungsbedingungen dahin gehend einzustellen, die Anzeige (25) des Bildes (50) anzupassen.

3. Ein sich automatisch einstellendes Digitalanzeigesystem (20; 20') gemäß Anspruch 2, bei dem die Steuerung (48) dahin gehend angepasst ist, das Steuersignal ansprechend auf ein Bildeingangssignal zu erzeugen, das einer normalen Version des digitalen Bildes (50) entspricht.

4. Ein sich automatisch einstellendes Digitalanzeigesystem (20; 20') gemäß Anspruch 3, das ferner eine Internetkommunikationsverknüpfungsvorrichtung umfasst, die dahin gehend angepasst ist, selektiv mit einer Internet-Website zu kommunizieren, und bei der das Bildeingangssignal (49) als Download von der Website empfangen wird.

5. Ein sich automatisch einstellendes Digitalanzeigesystem (20; 20') gemäß Anspruch 3, das ferner eine Computerverknüpfungsvorrichtung umfasst, die dahin gehend angepasst ist, das Bildeingangssignal (49) selektiv von einem Computer zu empfangen.

6. Ein sich automatisch einstellendes Digitalanzeigesystem (20; 20') gemäß Anspruch 3, das ferner eine Speichermedienlesevorrichtung (46) umfasst, die dahin gehend angepasst ist, das Bildeingangssignal aus einem Speichermedium auszulesen, das seitens der Speichermedienlesevorrichtung selektiv empfangen wird.

7. Ein sich automatisch einstellendes Digitalanzeigesystem (20; 20') gemäß einem der vorhergehenden Ansprüche, das ferner eine Eingabevorrichtung (35) zum Empfangen von Eingabebefehlen von einer Bedienperson umfasst.

8. Ein sich automatisch einstellendes Digitalanzeigesystem (20; 20') gemäß einem der vorhergehenden Ansprüche, das ferner ein Trägerbauglied (22) umfasst, das dahin gehend angepasst ist, die Anzeigevorrichtung (25), den Sensor (30, 32, 34) und die Steuerung (48) zu tragen.

9. Ein sich automatisch einstellendes Digitalanzeigesystem (20; 20') gemäß einem der Ansprüche 1 bis 7, das ferner ein Trägerbauglied (22) umfasst, das dahin gehend angepasst ist, die Anzeigevorrichtung (25) und die Steuerung (48) zu tragen, wobei der Sensor (30', 32', 34') von dem Trägerbauglied (22) getrennt ist.

10. Ein sich automatisch einstellendes Digitalanzeigesystem (20; 20') gemäß einem der vorhergehenden Ansprüche, bei dem:
der Sensor (30, 32, 34; 30', 32', 34'; 34'') eine Bewegungserfassungsvorrichtung umfasst; und
die Steuerung (48) dahin gehend angepasst ist, ansprechend auf eine durch die Bewegungserfassungsvorrichtung erfasste Bewegung die Anzeigevorrichtung (25) zu aktivieren.

11. Ein sich automatisch einstellendes Digitalanzeigesystem (20; 20') gemäß einem der vorhergehenden Ansprüche, bei dem:
der Sensor (30, 32, 34; 30', 32', 34'; 34'') eine Umgebungsbeleuchtungspegelerfassungsvorrichtung umfasst; und
die Steuerung (48) dahin gehend angepasst ist, ansprechend auf den durch die Umgebungsbeleuchtungspegelerfassungsvorrichtung erfassten Umgebungsbeleuchtungspegel die Anzeigevorrichtung (25) einzustellen.

12. Ein sich automatisch einstellendes Digitalanzeigesystem (20; 20') gemäß einem der vorhergehenden Ansprüche, bei dem:
der Sensor (30, 32, 34; 30', 32', 34'; 34'') eine Umgebungsbeleuchtungsspektrumserfassungsvorrichtung umfasst; und
die Steuerung (48) dahin gehend angepasst ist, ansprechend auf das durch die Umgebungsbeleuchtungsspektrumserfassungsvorrichtung erfasste Spektrum der Umgebungsbeleuchtung eine Farbabbildung für die Anzeigevorrichtung (25) einzustellen.

13. Ein sich automatisch einstellendes Digitalanzeigesystem (20; 20') gemäß einem der vorhergehenden Ansprüche, bei dem:
der Sensor (30, 32, 34; 30', 32', 34'; 34") dahin gehend angepasst ist, eine Positionserfassungsvorrichtung zu umfassen, die dahin gehend angepasst ist, die Position einer Person (V) zu erfassen; und
die Steuerung (48) dahin gehend angepasst ist, ansprechend auf die durch die Positionserfassungsvorrichtung erfasste Position der Person (V) die Anzeigevorrichtung (25) einzustellen.

14. Ein sich automatisch einstellendes Digitalanzeigesystem (20; 20') gemäß einem der vorhergehenden Ansprüche, das ferner eine Lautsprechervorrichtung (70) umfasst, die dahin gehend angepasst ist, eine hörbare Ausgabe zu emittieren.

15. Ein Verfahren zum Anzeigen eines digitalen Bildes (50) gegenüber einem Betrachter (V), wobei das digitale Bild eine Darstellung eines virtuellen Objekts ist, wobei das Verfahren folgende Schritte umfasst:
Anzeigen des digitalen Bildes (50) für den Betrachter (V) mit einer Anzeigevorrichtung (25) ansprechend auf ein Steuersignal;
Erfassen der Richtung, aus der der Betrachter (V) die Anzeigevorrichtung (25) betrachtet;
Einstellen des Steuersignals dahin gehend, die Anzeige des Bildes an Änderungen der Richtung anzupassen, aus der der Betrachter (V) die Anzeigevorrichtung (25) betrachtet, wobei
der Einstellschritt ansprechend auf den Erfassungsschritt durchgeführt wird und ein Einstellen des Steuersignals dahin gehend umfasst, ein Bild anzuzeigen, das gedreht ist und das, wenn es seitens des Betrachters (V) betrachtet wird, das virtuelle Objekt aus der Perspektive der Richtung darstellt, aus der der Betrachter (V) die Anzeigevorrichtung (25) betrachtet.

16. Ein Verfahren gemäß Anspruch 15, das ferner folgende Schritte umfasst:
Erfassen von Umgebungsbedingungen in der Nähe der Anzeigevorrichtung (25); und
Einstellen des Steuersignals ansprechend auf das Erfassen, um die Anzeige des digitalen Bildes (50) durch die Anzeigevorrichtung (25) anzupassen.

17. Ein Verfahren gemäß Anspruch 15, das ferner den Schritt des Empfangens einer nominellen Version des digitalen Bildes (50) umfasst, und bei dem der Einstellschritt den Schritt des Einstellens der nominellen Version des digitalen Bildes (50) umfasst.

18. Ein Verfahren gemäß Anspruch 17, bei dem der Empfangsschritt ein Empfangen der nominellen Version (50) von einer Internet-Website umfasst.

19. Ein Verfahren gemäß Anspruch 18, bei dem der Empfangsschritt ein periodisches Empfangen neuer digitaler Bilder von der Website umfasst.

20. Ein Verfahren gemäß Anspruch 17, bei dem der Empfangsschritt ein Empfangen der nominellen Version (50) von einem Computer umfasst.

21. Ein Verfahren gemäß Anspruch 17, bei dem der Empfangsschritt ein Empfangen der nominellen Version (50) von einem Speichermedium umfasst.

22. Ein Verfahren gemäß einem der Ansprüche 15 bis 21, das ferner den Schritt des Empfangens von Eingabebefehlen (40, 42, 44, 45) von einer Bedienperson umfasst.

23. Ein Verfahren gemäß einem der Ansprüche 15 bis 21, bei dem:
der Erfassungsschritt ein Erfassen einer Bewegung umfasst; und
der Einstellschritt den Schritt des Aktivierens der Anzeigevorrichtung (25) ansprechend auf den Bewegungserfassungsschritt umfasst.

24. Ein Verfahren gemäß einem der Ansprüche 15 bis 21, bei dem der Erfassungsschritt ein Erfassen eines Umgebungsbeleuchtungspegels umfasst und der Einstellschritt den Schritt des Einstellens der Anzeigevorrichtung (25) ansprechend auf den Erfassungsschritt umfasst.

25. Ein Verfahren gemäß einem der Ansprüche 15 bis 21, bei dem:
der Erfassungsschritt ein Erfassen der Position einer Person (V) umfasst; und
der Einstellschritt ein Einstellen der Anzeigevorrichtung (25) ansprechend auf den Erfassungsschritt umfasst.

26. Ein Verfahren gemäß einem der Ansprüche 15 bis 21, bei dem der Einstellschritt ein Einstellen einer Farbabbildung für die Anzeigevorrichtung (25) umfasst.

27. Ein Verfahren gemäß einem der Ansprüche 15 bis 21, das ferner den Schritt des Emittierens einer hörbaren Ausgabe (70) umfasst.

## Revendications

1. Système d'affichage numérique à ajustement automatique (20 ; 20') pour afficher une image numérique (50) aux yeux d'un spectateur (V), dans lequel l'image numérique est une représentation d'un objet virtuel, comprenant :
un dispositif d'affichage (25) adapté pour afficher de manière sélective l'image numérique (50) pour le spectateur (V) en réponse à un signal de contrôle ;
un capteur (30, 32, 34 ; 30', 32', 34' ; 34'') adapté pour détecter la direction depuis laquelle le spectateur (V) voit le dispositif d'affichage (25) ; et
un contrôleur (48) adapté pour ajuster le signal de contrôle pour adapter l'affichage de l'image aux changements de la direction depuis laquelle le spectateur (V) voit le dispositif d'affichage (25), dans lequel
le capteur (30, 32, 34 ; 30', 32', 34' ; 34'') est adapté pour envoyer, en réponse à la détection de la direction depuis laquelle le spectateur (V) voit le dispositif d'affichage (25), un signal de capteur au contrôleur (48) qui est adapté pour ajuster le signal de contrôle pour afficher une image qui est tournée et qui, lorsqu'elle est vue par le spectateur (V), représente l'objet virtuel comme vu depuis la direction depuis laquelle le spectateur (V) voit le dispositif d'affichage (25).

2. Système d'affichage numérique à ajustement automatique (20 ; 20') selon la revendication 1, dans lequel :
le capteur (30, 32, 34 ; 30', 32', 34' ; 34'') est adapté pour surveiller les conditions ambiantes au voisinage du dispositif d'affichage (25) et est adapté pour générer en réponse à celles-ci un signal de capteur ; et
le contrôleur (48) est adapté pour ajuster le signal de contrôle en réponse au signal de capteur pour des changements desdites conditions ambiantes pour adapter l'affichage (25) de l'image (50).

3. Système d'affichage numérique à ajustement automatique (20 ; 20') selon la revendication 2, dans lequel le contrôleur (48) est adapté pour générer le signal de contrôle en réponse à un signal d'entrée d'image correspondant à une version normale de l'image numérique (50).

4. Système d'affichage numérique à ajustement automatique (20 ; 20') selon la revendication 3, comprenant en outre un dispositif de liaison de communication à Internet qui est adapté pour communiquer de manière sélective avec un site Web Internet, et dans lequel le signal d'entrée d'image (49) est reçu sous la forme d'un téléchargement depuis le site Web.

5. Système d'affichage numérique à ajustement automatique (20 ; 20') selon la revendication 3, comprenant en outre un dispositif de liaison d'ordinateur qui est adapté pour recevoir de manière sélective le signal d'entrée d'image (49) provenant d'un ordinateur.

6. Système d'affichage numérique à ajustement automatique (20 ; 20') selon la revendication 3, comprenant en outre un dispositif de lecture de support de stockage (46) qui est adapté pour lire le signal d'entrée d'image provenant d'un support de stockage reçu de manière sélective par le dispositif de lecture de support de stockage.

7. Système d'affichage numérique à ajustement automatique (20 ; 20') selon l'une quelconque des revendications précédentes comprenant en outre un dispositif d'entrée (35) pour recevoir des instructions d'entrée provenant d'un opérateur.

8. Système d'affichage numérique à ajustement automatique (20 ; 20') selon l'une quelconque des revendications précédentes comprenant en outre un membre formant support (22) qui est adapté pour supporter le dispositif d'affichage (25), le capteur (30, 32, 34) et le contrôleur (48).

9. Système d'affichage numérique à ajustement automatique (20 ; 20') selon l'une quelconque des revendications 1 à 7 comprenant en outre un membre formant support (22) qui est adapté pour supporter le dispositif d'affichage (25) et le contrôleur (48), avec le capteur (30', 32', 34') étant séparé du membre formant support (22).

10. Système d'affichage numérique à ajustement automatique (20 ; 20') selon l'une quelconque des revendications précédentes dans lequel :
le capteur (30, 32, 34 ; 30', 32', 34' ; 34'') comprend un dispositif de détection de mouvement ; et
le contrôleur (48) est adapté pour activer le dispositif d'affichage (25) en réponse à un mouvement détecté par le dispositif de détection de mouvement.

11. Système d'affichage numérique à ajustement automatique (20 ; 20') selon l'une quelconque des revendications précédentes dans lequel :
le capteur (30, 32, 34 ; 30', 32', 34' ; 34'') comprend un dispositif de détection de niveau d'éclairage ambiant ; et
le contrôleur (48) est adapté pour ajuster le dispositif d'affichage (25) en réponse au niveau d'éclairage ambiant détecté par le dispositif de détection de niveau d'éclairage ambiant.

12. Système d'affichage numérique à ajustement automatique (20 ; 20') selon l'une quelconque des revendications précédentes dans lequel :
le capteur (30, 32, 34 ; 30', 32', 34' ; 34'') comprend un dispositif de détection de spectre d'éclairage ambiant ; et
le contrôleur (48) est adapté pour ajuster le dispositif d'affichage (25) en réponse au spectre de l'éclairage ambiant détecté par le dispositif de détection de spectre d'éclairage ambiant.

13. Système d'affichage numérique à ajustement automatique (20 ; 20') selon l'une quelconque des revendications précédentes dans lequel :
le capteur (30, 32, 34 ; 30', 32', 34' ; 34'') est adapté pour comprendre un dispositif de détection d'emplacement qui est adapté pour détecter l'emplacement d'une personne (V) ; et
le contrôleur (48) est adapté pour ajuster le dispositif d'affichage (25) en réponse à l'emplacement de la personne (V) détectée par le dispositif de détection d'emplacement.

14. Système d'affichage numérique à ajustement automatique (20 ; 20') selon l'une quelconque des revendications précédentes comprenant un haut-parleur (70) qui est adapté pour émettre une sortie audible.

15. Procédé d'affichage d'une image numérique (50) à un spectateur (V), dans lequel l'image numérique est une représentation d'un objet virtuel, comprenant les étapes consistant à :
afficher l'image numérique (50) pour le spectateur (V) avec un dispositif d'affichage (25) en réponse à un signal de contrôle ;
détecter la direction depuis laquelle le spectateur (V) voit le dispositif d'affichage (25) ; et
ajuster le signal de contrôle pour adapter l'affichage de l'image aux changements de la direction depuis laquelle le spectateur (V) voit le dispositif d'affichage (25), où
l'étape d'ajustement est exécutée en réponse à l'étape de détection et comprend l'ajustement du signal de contrôle pour afficher une image qui est tournée et qui, lorsqu'elle est vue par le spectateur (V), représente l'objet virtuel comme vu depuis la direction depuis laquelle le spectateur (V) voit le dispositif d'affichage (25).

16. Procédé selon la revendication 15, comprenant en outre les étapes consistant à :
capter les conditions ambiantes du dispositif d'affichage (25) ; et
ajuster le signal de contrôle en réponse à ladite capture pour adapter l'affichage de l'image numérique (50) par le dispositif d'affichage (25).

17. Procédé selon la revendication 15, comprenant en outre l'étape consistant à recevoir une version nominale de l'image numérique (50), et dans lequel l'étape d'ajustement comprend l'étape consistant à ajuster la version nominale de l'image numérique (50).

18. Procédé selon la revendication 17, dans lequel l'étape de réception comprend de recevoir la version nominale (50) à partir d'un site Web Internet.

19. Procédé selon la revendication 18, dans lequel l'étape de réception comprend la réception de manière périodique de nouvelles images numériques à partir du site Web Internet.

20. Procédé selon la revendication 17, dans lequel l'étape de réception comprend la réception de la version nominale (50) à partir d'un ordinateur.

21. Procédé selon la revendication 17, dans lequel l'étape de réception comprend la réception de la version nominale (50) à partir d'un support de stockage.

22. Procédé selon l'une quelconque des revendications 15 à 21, comprenant en outre l'étape consistant à recevoir des instructions d'entrée (40, 42, 44, 45) à partir d'un opérateur.

23. Procédé selon l'une quelconque des revendications 15 à 21, dans lequel :
l'étape consistant à capter comprend la détection d un mouvement ; et
l'étape consistant à ajuster comprend l'étape consistant à activer le dispositif d'affichage (25) en réponse à l'étape de détection de mouvement.

24. Procédé selon l'une quelconque des revendications 15 à 21, dans lequel l'étape consistant à capter comprend la détection d' un niveau d'éclairage ambiant, et l'étape d'ajustement comprend l'étape consistant à ajuster le dispositif d'affichage (25) en réponse à l'étape de détection.

25. Procédé selon l'une quelconque des revendications 15 à 21, dans lequel :
l'étape consistant à capter comprend la détection de l'emplacement d'une personne (V) ; et
l'étape consistant à ajuster comprend l'ajustement du dispositif d'affichage (25) en réponse à l'étape de détection.

26. Procédé selon l'une quelconque des revendications 15 à 21, dans lequel l'étape d'ajustement comprend l'ajustement du mappage des couleurs pour le dispositif d'affichage (25).

27. Procédé selon l'une quelconque des revendications 15 à 21, comprenant en outre l'étape consistant à émettre une sortie audible (70).
